Europäisches Patentamt

European Patent Office

Office européen des brevets

(11) Publication number: **0 089 182**
**A2**

## (12) EUROPEAN PATENT APPLICATION

(21) Application number: **83301312.1**

(22) Date of filing: **09.03.83**

(51) Int. Cl.³: **C 08 L 51/00**
**C 08 L 27/06**

(30) Priority: **11.03.82 US 356999**

(43) Date of publication of application:
**21.09.83 Bulletin 83/38**

(84) Designated Contracting States:
**DE FR GB IT NL**

(71) Applicant: **UNIROYAL, INC.**
**1230 Avenue of the Americas Rockefeller Center**
**New York, New York 10020(US)**

(72) Inventor: **Paddock, Charles F.**
**202 Holly Hill Lane Southbury**
**New Haven Connecticut 06488(US)**

(74) Representative: **Harrison, Michael Robert et al,**
**URQUHART-DYKES & LORD 11th Floor Tower House**
**Merrion Way**
**Leeds LS2 8PB West Yorkshire(GB)**

(54) **Blend of graft copolymer and polyvinyl chloride resin.**

(57) Flame retardant blends of AES and PVC and/or impact-modified PVC, containing 10-90% PVC and 90-10% AES, by weight, optionally with flame retardant additives.

EP 0 089 182 A2

Croydon Printing Company Ltd.

5793

## BLEND OF GRAFT COPOLYMER AND POLYVINYL CHLORIDE RESIN

This invention relates to a blend of graft copolymer and polyvinyl chloride resin.

Various blends of polyvinyl chloride resin and graft copolymer have previously been proposed. Thus, U.S. patent 4,251,645, Humme et al., Feb. 17, '81, is concerned with molding compositions having high impact strength comprising from 20 to 99 parts of polyvinyl chloride resin and from 1 to 80 parts of a graft copolymer produced by solution polymerization above 80°C of certain resin-forming monomers (e.g. styrene-acrylonitrile) on an EPDM rubber spine.

U.S. patent 3,489,821, Witt and Paddock, January 13, 1970, mentions blends of 30-97 parts of PVC resin with 70-3 parts of a gum plastic blend of (a) styrene-acrylonitrile resin and (b) graft copolymer of styrene and acrylonitrile on ethylene-propylene rubber.

Plasdoc Abstract 10062X/06 of Japanese patent 50088-167, Hitachi, July 15, 1975, discloses graft copolymer blends with PVC resin in 2-50:98-50 ratio. Also of interest are the following: Plasdoc Abstract 55728V/21 of Japanese patent 49002848, Showa Denko, January 11, 1974; Plasdoc Abstract 30922X/17 of Japanese patent 5102854, Sumitomo Chemical, March 11, 1976; French patent 2,145,845, Solvay; U.S. Patents 3,641,207, Lauchlan, Feb. 8, 1977, and 4,054,615, Bayer, Aug. 18, 1977, and Roofing/Siding/Insulation magazine, page 12, October, 1980.

The present invention is directed to various improved blends that are remarkable for their flame retardant properties. In another aspect, the invention provides blends having high impact strength.

The invention contemplates mixtures of 10 to 90% (frequently 10 to 50%) by weight of PVC (polyvinyl chloride) resin and correspondingly 90 to 10% (frequently 90 to 50%) of graft copolymer composition as hereinafter defined. These compositions may contain an effective amount of a flame retardant agent, e.g., a metallic flame retarding agent, and/or halogen containing flame retarding agent, such as an antimony or tin compound or the like, notably antimony oxide. Suitable halogen-containing flame retardants include other halogen-containing polymers such as chlorinated polyethylene, chlorinated polyvinyl chloride or small molecule materials such as Pyro Check 77B (trademark), Firemaster 680 (trademark), tetrabromobisphenol A, and the like. Usually a small amount of flame retardant is sufficient, e.g. 5 to 10 parts per 100 parts by weight of graft copolymer plus PVC, although larger amounts such as 20 parts or more may be used if desired. In blends containing low amounts of PVC (i.e., toward the 10% PVC end of the range) the amount of antimony oxide or the like is usually of the order of 10 parts. As the PVC content is increased the amount of antimony oxide or other flame retardant may be decreased, until the high side of the range of PVC content (50% or more of PVC) is neared, where the antimony oxide content may decrease to zero. Thus, in the absence of antimony oxide the following flame out times are typical:

| %PVC | 0 | 50 | 85 | 100 |
|---|---|---|---|---|
| %AES | 100 | 50 | 15 | 0 |
| F.O.T.,sec. | - | 5-10 | 1-2 | 0.5 |

The flame out time, "F.O.T.", is the time that the sample remains lit after removing the ignition source in the Underwriters Laboratories UL-94 vertical test (thickness 1/16"). In the first sample (0% PVC, 100% AES) the flame does not go out - the sample is totally consumed.

A preferred flame resistant composition contains 15-25% PVC, 85-75% of the graft copolymer composition and 8-15 parts of flame retardant, e.g., antimony oxide, per 100 parts of polymers.

It is preferred that the composition of the invention have a flame out time of less than 30 seconds, more preferably less than 10 seconds, and most preferably not more than 5 seconds.

The graft copolymer composition employed in the foregoing blends may be referred to as "AES" and is ordinarily based on a graft copolymer of resin-forming monomeric material (especially such monomers as vinyl aromatics, alkenoic nitriles, esters, or acids, or mixtures thereof, e.g., a mixture of styrene and acrylonitrile) on an olefin copolymer rubber spine, whether a saturated ethylene-propylene rubber (EPM) or an unsaturated terpolymer (EPDM) containing a suitable diene, especially a non-conjugated diene, as in rubbery terpolymers of ethylene, propylene, and dicyclopentadiene, ethylidene norbornene, hexadiene, or the like. In the preparation of such a graft copolymer, much of the resin-forming monomers become chemically grafted to the rubbery spine, but a certain amount of ungrafted resin is also formed (i.e., grafting efficiency is not 100%). In a preferred practice, additional separately prepared resin is blended with the product of the graft polymerization step. Typically, separately prepared styrene-acrylonitrile resin (SAN) is blended with the product of graft polymerization of styrene and acrylonitrile on EPDM. However, it is also possible to make all of the resinous portion in situ during the graft polymerization. In either case the entire final SAN-EPDM product may be referred to as AES.

In preferred flame retardant blends of the invention, the EPDM content of the product of the graft copolymerization step is from 35 to 60%, preferably 50%, the EPDM content of the AES after blending in separately prepared resin is 15 to 30%, preferably 23%, and the EPDM content of the final total AES-PVC blend is from 7.5 to 27%, preferably 18%, based on the total weight of polymers.

The invention also provides blends that are remarkable for their high impact strength, compared to PVC resin alone. In this form of the invention, referred to as impact modified PVC, the PVC content ranges from 75 to 90%, preferably 85%, while the AES ranges from 25 to 10%, preferably 15%; the EPDM content of the product of the graft polymerization step is 40 to 65%, perferably 50%. It is not necessary to blend in additional separately prepared SAN resin. The EPDM content of the final AES-PVC blend is from 4 to 16%, preferably 7.5%.

The AES component of the blend of the invention is preferably prepared by blending two separate components, namely:

(A) a graft copolymer of styrene and acrylonitrile on EPDM rubber, particularly ethylene-propylene-5-ethylidene-2-norbornene terpolymer rubber; and

(B) separately prepared styrene-acrylonitrile resin.

Examples of the graft copolymer component (A) and the separately prepared resin component (B) are described in more detail in U.S. Patent 4,202,948, Peascoe, May 13, 1980. The preferred graft copolymer (A) is prepared by graft copolymerizing (a) styrene and acrylonitrile in weight ratio of 80/20 to 65/35 on (b) a rubbery terpolymer of ethylene, propylene and 5-ethylidene-2-norbornene in which the weight ratio of ethylene to propylene is within the range of from 80/20 to 20/80. The Mooney viscosity of the terpolymer rubber (b) is preferably from 40 to 78 ML-4 at 257°F and the iodine number of the rubber (b) preferably is from 15 to 40. The amount of (a) acrylonitrile/styrene is about 50% based on the weight of (a) plus (b).

The preferred separately prepared resin (B) is a copolymer of styrene and acrylonitrile in weight ratio of 80/20 to 65/35 having an intrinsic viscosity in dimethylformamide at 30°C of at least 0.4. The amount of resin (B) in the AES is sufficient to provide an over-all ratio of resin to rubber in the range from 80/20 to 75/25. The addition of separately prepared resin (B) is generally employed in the flame retardant blends containing 50% or less of PVC, but is unnecessary in the impact modified PVC blends containing 75% or more of PVC.

In a particularly valuable form of the invention, an antioxidant is present during the graft copolymerization stage.

If the AES portion of the blend contains both components A (the graft copolymer) and B (the separately prepared resin), these components A and B are sheared or masticated together at elevated (fluxing) temperature, for example in a twin screw type of extruder-blender, prior to blending with the PVC resin to provide the blend of the invention.

Blending of the AES and PVC can be carried out in conventional plastic mixing equipment, e.g., extruder, Banbury (trademark), etc., at an elevated temperature sufficient to flux the mixture. One way to provide the AES-PVC blend is by reworking scrap or rejects or similar recycled material that is a composite of PVC and AES, for example a laminate having a layer of PVC and a layer of AES. Additional AES and/or PVC may be added to such re-worked laminate material if necessary to bring the ratio of PVC:AES into the desired range.

The addition of PVC to AES extends the usefulness of AES into areas where both the recognized strengths of AES (weather resistance, high impact strength, ease of processing, attractive cost-performance balance, etc.) and the flame resistance provided by the PVC are required. Unexpectedly, the resulting blends not only combine the most desirable features of both polymers, but also provide an increase in impact strength further extending the usefulness of AES based polymers.

The addition of relatively low levels of AES can be used to correct one of the major deficiencies of PVC (poor impact strength). Due to the excellent weatherability of the AES, the weather resistance of the PVC is not impaired by the addition of the AES. The EPDM portion of the AES serves as a weatherable impact modifier, while the grafted SAN greatly improves the compatibility between the EPDM and the PVC. Inspection of Table I below and the graph of impact data therein shows that the impact strength increases, goes through a maximum and then declines as the concentration of AES (either graft copolymer alone or graft copolymer plus separately prepared SAN resin) in the blend is increased. The intermediate points unexpectedly provide exceptionally good balances of impact strength and hardness. The graph of impact strength (notched Izod) at room temperature versus EPDM content in blends of AES and PVC shows an unexpected increase in impact strength when compared to the theoretical (dotted line) relationship.

## TABLE I

### AES-PVC BLENDS

| Run No.: | 1 | 2 | 3 | 4 | 5 | 6 | 7 | 8 |
|---|---|---|---|---|---|---|---|---|
| PVC (Marvinol VR 23; trademark) | 100 | 90 | 85 | 75 | 80 | 50 | 20 | |
| Graft Copolymer[1] | | 10 | 15 | 25 | | | | |
| Graft-SAN blend[2] | | | | | 20 | 50 | 80 | 100 |
| Thermolite 31 (trademark) | 3 | 3 | 3 | 3 | 3 | 3 | 3 | |
| Resin/Rubber | 100/0 | 95/5 | 92/8 | 88/12 | 95/5 | 88/12 | 82/18 | 77/23 |
| Notched Izod, RT | 0.6 | 2.5 | 14.2 | 10.1 | 1.3 | 11.2 | 10.4 | 9.9 |
| Rockwell R | 117 | 110 | 107 | 96 | 114 | 106 | 97 | 94 |

---

1  AES graft (50% rubber).

2  Compounded AES containing separately prepared SAN resin (23% rubber).

AES

⊙ 23% EPDM (GRAFT + SAN)

▫ 50% EPDM (GRAFT ONLY)

% EPDM IN PVC + SAN + EPDM

The following examples will serve to illustrate the practice of the invention in more detail.

### Example 1

A graft copolymer may be prepared as described in U.S. patent 4,202,948 (Example 2) referred to above.

A 10-gallon autoclave equipped with a thermometer and a motor stirrer is charged with 413 parts by weight of water, 0.27 parts by weight of Methocel K-100 (trademark; hydroxypropyl methylcellulose produced by Dow Chemical Company) 100 parts by weight of ethylene-propylene-5-ethylidene-2-norbornene copolymer of 58/42 ethylene/propylene ratio, 20 iodine number and 45 ML-4 at 257°F. which has been ground to a Tyler mesh particle size 3, and a mixture of 75 parts by weight of styrene, 40 parts by weight of acrylonitrile, 3 parts by weight of Lupersol-11 (trademark; 75% t-butylperoxy pivalate in mineral spirits) as a polymerization initiator, and 1.0 part of antioxidant, e.g., octadecyl-3,5-di-tent-butyl-4-hydroxyhydrocinnamate.

The reaction mixture is heated to 80°F. for 1½ hours and then to 240°F. and kept at this temperature for another 1½ hours at which time the reaction mixture is cooled to room temperature and the graft copolymer recovered by filtering and drying overnight in an over at 66°C.

To make the AES, 46 parts of graft copolymer, 54 parts of SAN resin (Tyril 880B, trademark, from Dow Chemical), and 0.75 parts each of Tinuvin P (trademark) and Tinuvin 770 (trademark) (UV stabilizers from Ciba-Geigy) are fluxed at 165°C for 10 minutes at 90 rpm in a Rheocord (trademark) Type M Torque Rheometer made by Haake, Inc. and equipped with cam rotors.

To make the AES/PVC blend 50 parts of AES (as above), 50 parts of PVC and 3 parts of Thermolite 31; (trademark PVC stabilizer-M&T Chemcials) are fluxed at 165°C for 10 minutes at 90 RPM in the Rheocord. The following compression molded physical properties were obtained on the blend:

| | |
|---|---|
| Notched Izod, RT | 11.2 ft.-lbs./in. |
| Rockwell R | 106 |

## Example 2

The following blend is prepared, using essentially the procedure of Example 1:

|  | Parts by Weight |
|---|---|
| AES (as in Example 1) | 74 |
| PVC (Tenneco 225; trademark) | 20 |
| Chlorinated polyethylene (Dow CPE 3614; trademark) | 8 |
| Wax (lubricant, Acrawax C; trademark) | 2.5 |
| Calcium stearate | 1 |
| PVC stabilizers Advastab TM181(trademark) | .5 |
| Advastab T340 | 1 |
| Antimony oxide (Thermogard S; trademark) | 8 |

Typical notched Izod impact strength of such a blend at room temperature is 8.9 foot-pounds per inch of notch. Typical Rockwell hardness (R scale) is 97. Flame-out time is approximately 4 seconds.

## Example 3

To make the graft copolymer/PVC blend, 15 parts of graft copolymer prepared as in Example 1 (fluxed at 165°C for 10 min. at 90 RPM in the Rheocord), 85 parts of PVC and 3 parts of Thermolite 31 (PVC stabilizer) are fluxed at 165°C for 10 min. at 90 RPM in the Rheocord. The following compression molded physical properties were obtained on the blend:

| Notched Izod, RT | 14.2 ft.-lbs./in. |
|---|---|
| Rockwell R | 107 |
| F.O.T. (sec.) | 2 |

CLAIMS:

1. A flame retardent blend characterised in that it comprises a mixture of 10-90% of PVC resin and corresponding 90-10% of AES graft copolymer composition, by weight based on the total weight of PVC resin and AES graft copolymer composition, with or without an effective amount of an additional flame retardant additive, the amount of PVC resin being at least 50% when said additional flame retardent additive is absent, the said AES comprising a graft copolymer of resin-forming monomeric material on EPM or EPDM rubber.

2. A blend according to claim 1 characterised in that the additional flame retardant additive is present in less than 20 parts, per 100 parts by weight of PVC resin plus AES graft copolymer composition.

3. A blend according to claim 1 or 2 characterised in that the amount of PVC resin is from 10 to 50% and the amount of AES graft copolymer composition is from 90 to 50%.

4. A blend according to claim 3 characterised in that the amount of additional flame retardent additive ranges from 10 parts when the PVC resin content of the blend is 10%, down to zero parts when the PVC resin content of the blend is 50%, the said parts being by weight based on 100 parts of PVC resin plus AES graft copolymer composition.

5. A blend according to any of the preceding claims characterised in that the amount of PVC resin is from 15 to 25%, the amount of AES graft copolymer composition is from 85 to 75% and the amount of additional flame retardent additive is from 8 to 15 parts.

6. A blend according to any of the preceding claims characterised in that the additional flame retardant is antimony oxide.

7. A blend according to any of the preceding claims characterised in that the AES graft copolymer composition is a blend of (A) graft copolymer of styrene and acrylonitrile on EPDM with (B) separately prepared styrene-acrylonitrile resin.

8. A blend according to claim 7 characterised in that the EPDM content of (A) is from 35 to 60%, the EPDM content of the blend of (A) and (B) is from 15 to 30%, and the EPDM content of the total polymer blend is from 7.5 to 27%.

9. An impact modified PVC resin composition cjaracterised in that it comprises from 75 to 90% of PVC resin and from 25 to 10% of AES graft copolymer composition, the said AES comprising a graft copolymer of resin-forming monomeric material on EPM or EPDM rubber.

10. A composition according to claim 9 characterised in that the EPDM content of the graft copolymer is 40 to 65%, and the EPDM content of the total polymer blend is from 4 to 16%.

11. A composition according to claim 9 or 10 in which the resin forming monomeric material is styrene and acrylonitrile.

12. A blend according to any of claims 1 to 8 characterised in that the said AES is a thermoplastic graft copolymer composition comprising a blend of two separately prepared copolymer compositions (A) and (B);

(A) being a soft, rubbery graft copolymer formed by simultaneous graft copolymerization of:

(a) monoethylenically unsaturated resin-forming monomeric material; and

(b) a rubber polymer spine consisting essentially of a copolymerizate of ethylene, propylene and diene, the amount of said resin-forming monomeric material (a) grafted to the rubbery spine (b) being sufficient to provide a weight ratio of grafted resin to rubbery spine of at least 0.2;

(B) being a resinous polymer separately prepared in the absence of the rubber copolymer (b) by polymerization of monoethylically unsaturated resin-forming monomeric material;

wherein: the monomeric material (a) is a mixture of styrene and acrylonitrile in weight ration of 80/20 to 65/35, the rubbery copolymer (b) is a terpolymer of ethylene, propylene and diene in which the ration of ethylene to propylene is within the range of from 80/20 to 20/80, the Mooney viscosity of (b) is from 40 to 78 ML-4 at $257^O$F and the iodine number of (b) is from 15 to 40, the amount of (a) being about 50% based on the weight of (a) plus (b), the separately prepared resin (B) is a copolymer of styrene and acrylonitrile in weight ratio of 80/20 to 65/35 having an intrinsic viscosity in dimethylformamide at $30^O$C of at least 0.4, the amount of (B) in the blend being sufficient to provide an over-all ratio of resin to rubber in the range of from 80/20 to 75/25.